(19) **Europäisches Patentamt**
**European Patent Office**
**Office européen des brevets**

(11) **EP 3 573 343 B1**

(12) **EUROPEAN PATENT SPECIFICATION**

(45) Date of publication and mention
of the grant of the patent:
**31.03.2021 Bulletin 2021/13**

(51) Int Cl.:
***H04Q 11/00*** *(2006.01)*

(21) Application number: **19174644.5**

(22) Date of filing: **15.05.2019**

(54) **METHOD AND APPARATUS FOR RANGING NEW OPTICAL NETWORK UNIT IN PASSIVE OPTICAL NETWORK SYSTEM WITHOUT IMPACTING TRAFFIC OF RANGED OPTICAL NETWORK UNIT**

VERFAHREN UND VORRICHTUNG ZUR ENTFERNUNGSMESSUNG EINER NEUEN OPTISCHEN NETZWERKEINHEIT IN EINEM PASSIVEN OPTISCHEN NETZSYSTEM OHNE BEEINTRÄCHTIGUNG DES VERKEHRS DER ENTFERNTEN OPTISCHEN NETZWERKEINHEIT

PROCÉDÉ ET APPAREIL DE TÉLÉMÉTRIE D'UNE NOUVELLE UNITÉ DE RÉSEAU OPTIQUE DANS UN SYSTÈME DE RÉSEAU OPTIQUE PASSIF SANS AFFECTER LE TRAFIC DE L'UNITÉ DE RÉSEAU OPTIQUE DE TÉLÉMÉTRIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2018 US 201815982538**

(43) Date of publication of application:
**27.11.2019 Bulletin 2019/48**

(73) Proprietor: **Nokia Solutions and Networks Oy 02610 Espoo (FI)**

(72) Inventors:
• **Weeber, Bill**
**Raleigh, North Carolina 27612 (US)**

• **Tebbe, Roy**
**Raleigh, North Carolina 27612 (US)**

(74) Representative: **IP HILLS NV**
**Hubert Frère-Orbanlaan 329**
**9000 Gent (BE)**

(56) References cited:
**EP-A1- 2 448 152     US-A1- 2017 288 804**

• **"Gigabit-capable passive optical networks (G-PON): Transmission convergence layer specification", ITU-T DRAFT ; STUDY PERIOD 2013-2016, INTERNATIONAL TELECOMMUNICATION UNION, GENEVA ; CH, 13 November 2015 (2015-11-13), pages 1-170, XP044139785, [retrieved on 2015-11-13]**

## Description

### Technical Field

One or more example embodiments relate to passive optical networks and ranging of optical network units.

### Background

Conventionally, a Passive Optic Network (PON) requires an extended period of quiet time on the fiber optic cable in order for an Optical Line Terminal (OLT) to discover and range a new Optical Network Unit (ONU). The quiet time is a period where no traffic from any known ONU can transmit data. This quiet time impacts overall bandwidth for the PON system. Also, if the PON system hosts dedicated time critical low latency traffic, it is not possible to disturb the traffic in order to have a sufficient quiet time to discover the new ONU using the convention methods.

The ITU-T draft standard specification entitled "Gigabit-capable passive optical networks (G-PON): Transmission convergence layer specification" and published on 13 November 2015, describes a conventional method for ranging new ONUs in a PON based on broadcasting a ranging grant and creation of a quiet window. As explained in 10.3.3 of the ITU-T draft specification, the quiet window must span the entire duration of the time interval wherein an arrival of a ranging response message can be expected. Therein, all operational ONUs are withheld from upstream transmitting.

European patent application EP 2 448 152 A1 entitled "Ranging Method and Apparatus in Passive Optical Network" describes a method for ranging new ONUs in a PON wherein the quiet window reserved for ranging is shortened to increase the upstream efficiency. In EP 2 448 152 A1, the quiet window is shortened by first obtaining a Round Trip Delay (RTD) for a round trip between the OLT and ONU. As described in [0023] and [0024] of EP 2 448 152 A1, the RTD may be obtained by sending a serial number request, receiving a serial number response and logging the timing thereof. The RTD is thereafter used to set the quiet window time and length for ranging, as explained in [0035]-[0038] of EP 2 448 152 A1.

### Summary

The scope of protection sought for various embodiments of the invention is set out by the independent claims.

The embodiments and features described in this specification that do not fall within the scope of the independent claims, if any, are to be interpreted as examples useful for understanding various embodiments of the invention.

One or more example embodiments relate to a method for a first optical transceiver to range in a Passive Optical Network one of a plurality of second optical transceivers.

In an example embodiment the method may include broadcasting a first ranging grant including a delay request to unranged second optical transceivers among the plurality of second optical transceivers. The delay request may indicate a first delay before the unranged second optical transceivers respond to the first ranging grant such that the unranged second optical transceivers respond after a desired delay. The method may also include determining whether a runt response is received in a quiet window established by the first optical transceiver. The quiet window may be a time that is a fraction of the upstream frame size when no responses are expected from ranged second optical transceivers among the plurality of second optical transceivers by not requesting responses from the ranged second optical transceivers with start times that would cause the responses to arrive during the quiet window. The runt response is a burst sent by a laser of one of the second optical transceivers with a laser power being below the maximum laser power such that the runt response does not substantially interfere with communication with other optical transceivers. The method may also include changing one of the desired delay or a timing of the quiet window in response to determining that no runt response was received in the quiet window, repeating the broadcasting and the determining in response to determining that no runt response was received in the quiet window. The method may also include identifying one of the unranged second optical transceivers in response to determining that a runt response was received, and establishing a ranged state with the identified unranged second optical transceiver.

In another example embodiment the method may include receiving a first ranging grant including a delay request at an optical transceiver, the delay request indicating a first delay before the optical transceiver responds to the first ranging grant such that the optical transceiver responds after a desired delay, determining the desired delay based on the delay request, sending a runt response after the desired delay with a laser of the optical transceiver, the runt response being sent with a laser power of the laser being below the maximum laser power such that the runt request does not substantially interfere with communication with other optical transceivers, receiving, from a network transceiver, a second ranging grant including an additional condition for response based on an identifier of the optical transceiver, sending the runt response in response to the identifier meeting the additional condition and establishing a ranged state with the network transceiver.

In another example embodiment the first optical transceiver may include a memory including computer readable instructions and a processor configured to execute the computer readable instructions. The memory, the processor and the computer readable instructions may cause the first optical transceiver to, broadcast a first ranging grant including a delay request to unranged second optical transceivers among a plurality of second optical transceivers, the delay request indicating a first delay before the unranged second optical transceivers respond to the first ranging grant such that the unranged second optical transceivers respond after a desired delay, determine whether a runt response is received in a quiet window established by the first optical transceiver, the quiet window being a time that is a fraction of the upstream frame size when no responses are expected from ranged second optical transceivers among the plurality of second optical transceivers by not requesting responses from the ranged second optical transceivers with start times that would cause the responses to arrive during the quiet window, the runt response being a burst sent by a laser of one of the second optical transceivers with a laser power being below the maximum laser power such that the runt response does not substantially interfere with communication with other optical transceivers, change one of the desired delay or a timing of the quiet window in response to determining that no runt response was received in the quiet window, repeat the broadcasting and the determining in response to determining that no runt response was received in the quiet window, identify one of the unranged second optical transceivers in response to determining that a runt response was received, and establish a ranged state with the identified unranged second optical transceiver.

In another example embodiment, an optical transceiver may include a memory including computer readable instructions and a processor configured to execute the computer readable instructions. The memory, the processor and the computer readable instructions may cause the optical transceiver to, receive a first ranging grant including a delay request at an optical transceiver, the delay request indicating a first delay before the optical transceiver responds to the first ranging grant such that the optical transceiver responds after a desired delay, determine the desired delay based on the delay request, sending a runt response after the desired delay with a laser of the optical transceiver, the runt response being sent with a laser power of the laser being below a normal laser power such that the runt response does not substantially interfere with communication with other optical transceivers, receive a second ranging grant including an additional condition for response based on an identifier of the optical transceiver, sending the runt response in response to the identifier meeting the additional condition, and establish a ranged state with the network transceiver.

## Brief Description of the Drawings

Example embodiments will become more fully understood from the detailed description given herein below and the accompanying drawings, wherein like elements are represented by like reference numerals, which are given by way of illustration only and thus are not limiting of this disclosure.

Fig. 1 is a block diagram illustrating an example Passive Optical Network (PON) according to at least one example embodiment.

Fig. 2 is a block diagram illustrating an example Optical Line Terminal (OLT) according to at least one example embodiment.

Fig. 3 is a block diagram illustrating an example Optical Network Unit (ONU) according to at least one example embodiment.

Fig. 4 is a timing diagram illustrating an example timing of communications between an OLT and an unranged ONU according to at least one example embodiment.

Fig. 5 is a diagram demonstrating example communications between an OLT and an unranged ONU according to at least one example embodiment.

Fig. 6 is a flow diagram illustrating example method steps that may be performed by an OLT according to at least one example embodiment.

Fig. 7 is a flow diagram illustrating another example method steps that may be performed by an ONU according to at least one example embodiment.

Fig. 8 is a diagram demonstrating example power levels of a laser in an ONU according to at least one example embodiment.

Fig. 9 is a diagram demonstrating example power levels of runt responses received at the OLT from the unranged ONUs.

## Detailed Description of Embodiments

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and should not be construed as limited to only the embodiments set forth herein.

Accordingly, it should be understood, however, that there is no intent to limit example embodiments to the particular forms disclosed. On the contrary, example embodiments are to cover all modifications, equivalents, and alternatives falling within the scope of this disclosure. Like numbers refer to like elements throughout the description of the Figures.

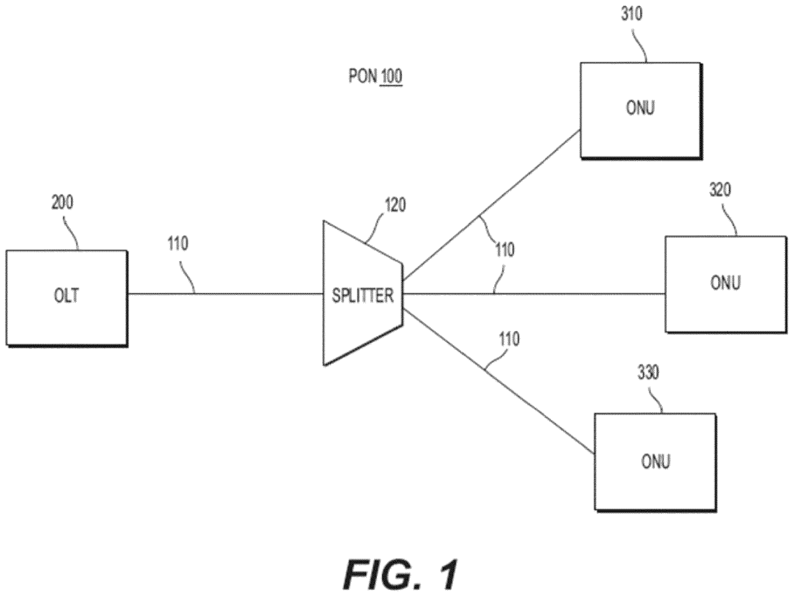

Fig. 1 is a block diagram illustrating an example Passive Optical Network (PON) 100. The PON 100 may include at least one Optical Line Terminal (OLT) 200 and at least one Optical Network Unit (ONU), for example ONUs 310, 320, and 330. The OLT 200 may be an example of a first optical transceiver. The ONUs 310, 320 and 330 may be examples of second optical transceivers. The PON may include several fiber optic cables 110 connecting the various elements of the PON. The PON may also include a splitter 120 configured to split the signals from the OLT 200 to the ONUs 310, 320, and 330.

In an example embodiment the ONU 310 may be ranged and the ONUs 320 and 330 may not be ranged. A ranged ONU such as ONU 310 may already have an assigned equalization delay. The equalization delay is calculated such that the time of flight of a request sent to the ONU 310, the standard response time (known to both the ONU 310 and the OLT 200), the equalization delay, and the time of flight for a response to the OLT 200 will add up to an expected delay. In some example embodiments, a communication frame may be 125μs. Thus, the equalization delay allows the ranged ONU 310 and the OLT 200 to synchronize communication.

The flight times may depend on the length of fiber optic cable between the OLT 200 and the ONU 310. Thus, ranged ONUs at different distances from the OLT 200 may be assigned different equalization delays. The flight times and the response time may remain constant.

The OLT 200 may also include a start time in the request. The start time indicates a delay from the beginning of a communication frame when the OLT 200 expects to receive the response from the ONU 310. The ONU 310 may delay responding to the request by the start time so that the response arrives at the expected time.

For example, the OLT 200 may send a request at the start of a Downstream Physical (DS PHY) frame. The request may include a start time. The ONU 310 may receive the request from the OLT 200 after a flight time. After a standard response time, the ONU 310 may delay responding for the equalization delay and also for the start time. The ONU 310 may then respond to the request such that after a flight time the response arrives at an expected time at the OLT 200.

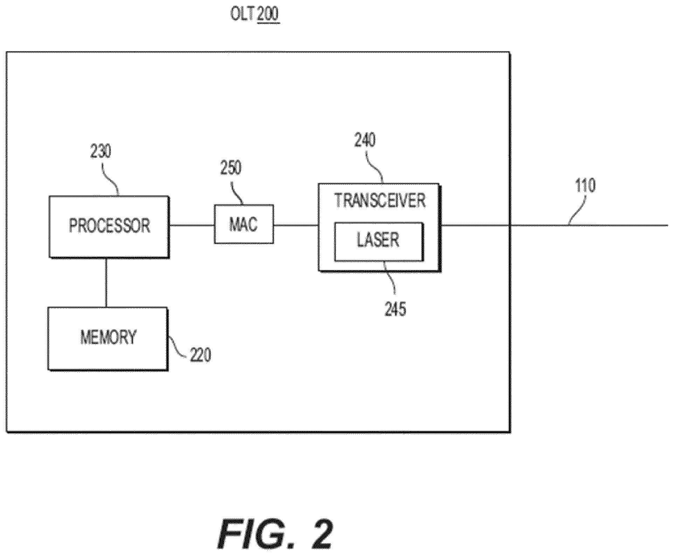

Fig. 2 is a block diagram illustrating an example Optical Line Terminal (OLT) 200. The OLT 200 may include a memory 220, a processor 230, and a transceiver 240 and a media access controller (MAC) 250. The memory 220 may store computer readable instructions for operating the OLT 200 and also information to be sent from the OLT 200 or information received from the ONUs. The processor 230 may control the OLT 200, including the memory 220, the MAC 250 and the transceiver 240 based on executing instructions stored in the memory 220. The transceiver 240 may receive and send information via the fiber optic cable 110 to the ONUs. The transceiver 240 may use a laser 245 to send information over the fiber optic cable 110. The MAC 250 may directly control the transceiver 240 based on instruction from the processor 230. The MAC 250 may track the frame timing of the OLT 200 and control the transceiver 240 based on the frame timing. In some example embodiments, the MAC 250 may be hardwired to interpret and setup delays for frame timing without instructions from the processor.

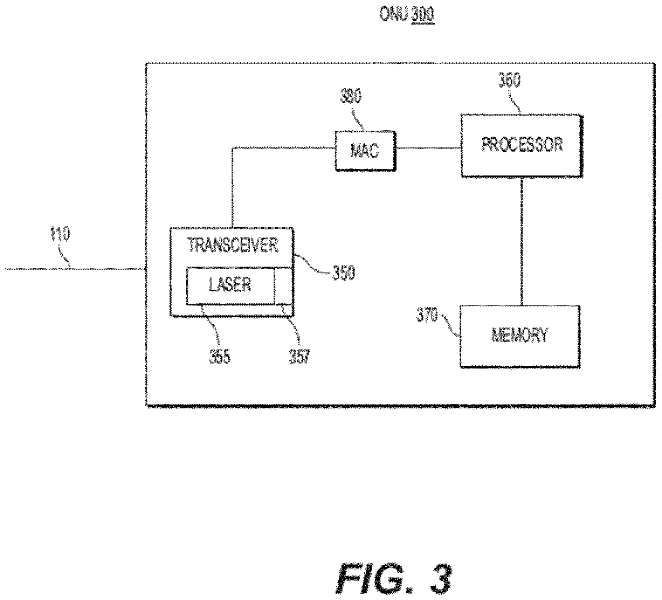

Fig. 3 is a block diagram illustrating an example Optical Network Unit (ONU) 300. ONUs 310, 320 or 330 may include the same components described in relation to ONU 300. ONU 300 may include a memory 370, a processor 360, a MAC 380, and a transceiver 350. The memory 370 may store computer readable instructions for operating the ONU 300 and also information to be sent from the ONU 300 or information received from the OLT 200. The processor 360 may control the ONU 300, including the memory 370, the MAC 380, and the transceiver 350 based on the instructions stored in the memory 370. The transceiver 350 may receive and send information via the fiber optic cable 110 to the OLT 200. The transceiver 350 may use a laser 355 to send information over the fiber optic cable 110. The MAC 380 may directly control the transceiver 350 based on the instruction from the processor 360. The MAC 380 may track the frame timing of the ONU 300 and control the transceiver 350 based on the frame timing. In some example embodiments, the MAC 380 may be hardwired to interpret and setup delays for frame timing without instructions from the processor.

The laser may optionally have a laser power control circuit 357 that controls the power output of the laser.

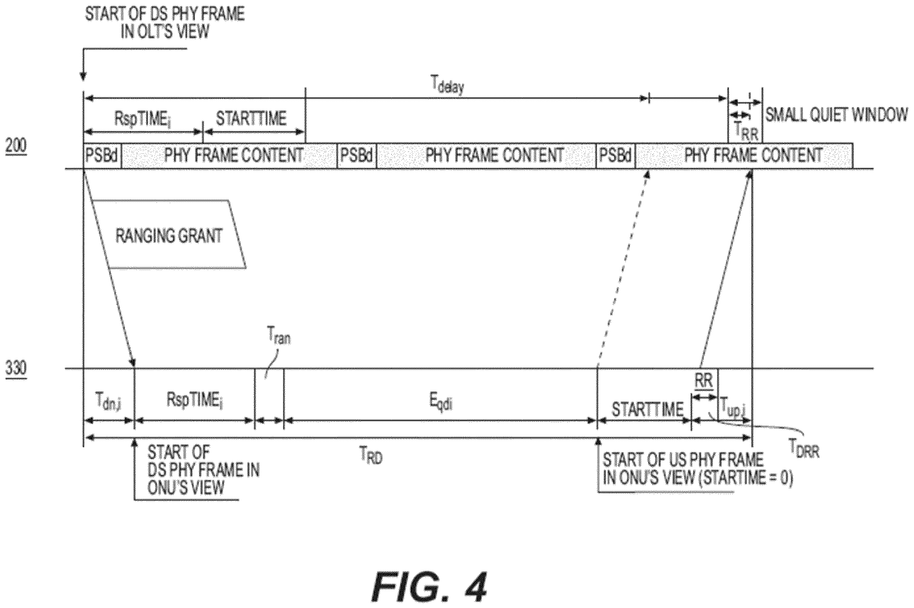

Fig. 4 is a timing diagram illustrating an example timing of communications between the OLT 200 and the unranged ONU 330. Fig. 4 shows the timing of a Downstream Physical (DS PHY) frame from the perspective of the OLT 200 and also the DS PHY frame from the perspective of the ONU 330.

In order to emulate the standard format for communicating with ranged ONUs, the OLT 200 may broadcast a pre-equalization delay for communication with unranged ONUs such as ONUs 320 and 330. The timing of the response depends on the distance of the unranged ONUs 320 and 330 from the OLT 200. Accordingly, the pre-equalization delay may represent a guess of how far away one of the unranged ONUs 320 and 330 is from the OLT 200.

After the OLT 200 has broadcast a pre-equalization delay for communication with unranged ONUs, the OLT 200 may send a first ranging grant at the start of the DS PHY frame from the perspective of the OLT 200. The first ranging grant may request a short low power response, known hereafter as a runt response RR from the unranged ONUs. The first ranging grant may arrive at the ONU 330 after a time of flight $T_{dni}$. The time of flight $T_{dni}$ may depend on the length of fiber optic cable between the OLT 200 and the ONU 330. After a response time $RspTime_i$ the ONU may wait to send a response based on the pre-equalization delay $Pre-Eqd_i$ previously broadcast to unranged ONUs such as ONU 330. The ONU 330 may also wait for a random delay time $T_{ran}$ specific to the ONU. ONU 330 may then wait for an additional time $StartTime_i$ sent in the first ranging grant before responding with a runt response RR. The additional time $StartTime_i$ may be an example of a requested delay. The runt response RR may then arrive at the OLT 200 after a flight time $T_{upi}$. The flight time $T_{upi}$ may depend on the length of the fiber optic cable 110 between the ONU 330 and the OLT 200 and thus may be the same as the flight time $T_{dni}$. The runt response RR may have a duration $T_{DRR}$ of about 40 ns or less. With a response of this length two unranged ONUs would have to have fiber optic cables with a difference in lengths of about 4 meters or less for two runt responses RR to interfere with each other. In order to prevent this interference, randomization can be used. Randomization may be accomplished by the OLT 200 requesting that each unranged ONUs change its random delay time $T_{ran}$. This may create an offset between two unranged ONUs with interfering runt responses RR.

The OLT 200 may create a small quiet window when no response is expected from the ranged ONUs such as ONU 310. The small quiet window may be an example of a quiet window. The OLT 200 may create this window by not requesting responses from the ranged ONUs with start times that would cause the responses to arrive during the small quiet window. The small quiet window may exist for a time $T_{sqw}$ that is a small fraction of the upstream frame size. For example, $T_{sqw}$ may be about 500 ns or less. This provides a distinct advantage over the standard practice of quiet windows which are several frames long.

The timing delay $T_{delay}$ is the total time from the start of the OLT 200 beginning to send the first ranging grant to the start of the small quiet window. A response delay $T_{RD}$ may be the total of the time of flight $T_{dni}$, response time $RspTime_i$, pre-equalization delay $Pre-Eqd_i$, $T_{ran}$, time $StartTime_i$, and flight time $T_{upi}$ added together. If $T_{Rd}$ is between the timing delay $T_{delay}$ and the Timing delay plus the duration of the small timing window $T_{sqw}$ minus the duration of the runt response $T_{DRR}$ such that the below equation is satisfied, the OLT 200 may be able to recognize the runt response in the small quiet window.

$$\text{Equation 1: } T_{delay} \leq T_{RD} \leq T_{delay} + T_{sqw} - T_{DRR}$$

If the runt response is not received in the small quiet window, the OLT 200 may adjust one or both of the timing delay $T_{delay}$ and the response delay $T_{RD}$.

The timing delay $T_{delay}$ may be changed by moving the small quiet window to a different location in the communication window. This may be accomplished by the OLT 200 not requesting responses from ranged ONUs during a different portion of the communication window.

The time of flight $T_{dni}$, response time $RspTime_i$, and flight time $T_{upi}$ may be fixed. Accordingly, the $T_{RD}$ may be changed by the OLT 200 by broadcasting a new pre-equalization delay $Pre-Eqd_{ii}$ for communication with unranged ONUs and/or by sending a new first ranging grant with a new time $StartTime_{ii}$.

The OLT 200 may measure the time after the start of the small quiet window when the runt response is detected $T_{RR}$.

A pre-equalization delay does not need to be used or a $Pre-Eqd_i$ of $0\mu s$ may be used. Accordingly, the communications between the OLT 200 and the unranged ONUs 320 and 330 do not need to emulate the communications between the OLT 200 and the ranged ONU 310. However, it may be advantageous in some circumstances to use a pre-equalization delay $Pre-Eqd_i$ of $0 \mu s$ rather than using no pre-equalization delay so that separate programming is not needed for the ONUs to communicate while unranged and ranged.

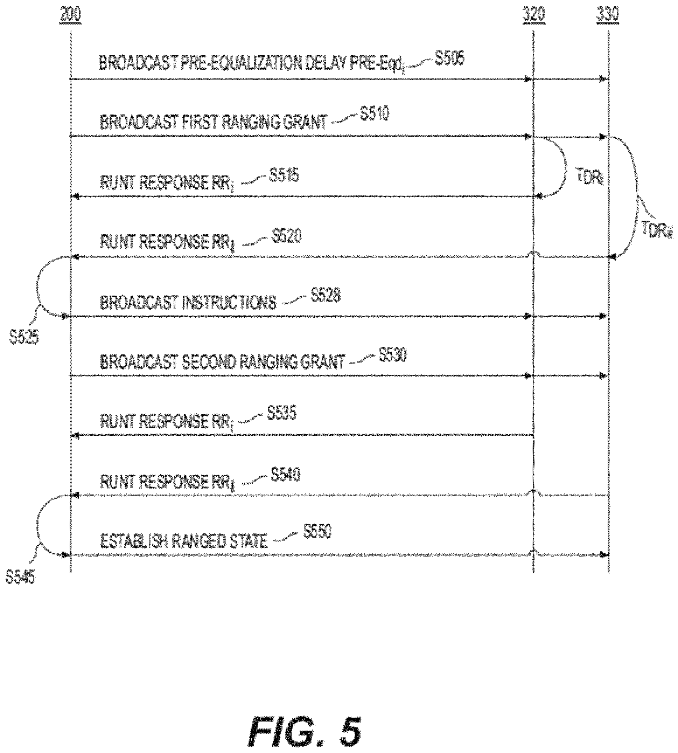

Fig. 5 is a diagram demonstrating example communications between an OLT 200 and an unranged ONUs 320 and 330. At S505, the OLT 200 may broadcast a pre-equalization delay $Pre-Eqd_i$ to ONUs 320 and 330. At S510, the OLT 200 may broadcast a first ranging grant to ONUs 320 and 330. At S515, ONU 320 after a response delay for ONU 320, $T_{RDi}$ may transmit a first runt response $RR_i$. At S520, ONU 330 after a response delay for ONU 320 $T_{RDii}$ may transmit a second runt response $RR_{ii}$. Response delays $RR_i$ and $RR_{ii}$ may be different because the flight times for communications between the OLT 200 and the ONUs 320 and 330 may be different due to different lengths of the fiber optic cables connecting the OLT 200 and the ONUs 320 and 330. Accordingly, it is possible that the $T_{delay}$ for only one of the first runt response and the second runt response will satisfy equation 1.

At S525, the OLT 200 determines if a runt response was received in the small quiet window. If the OLT 200 determines that no runt response was received during the small quiet window, then the OLT 200 may adjust one of the response delay $T_{RD}$ or the timing delay $T_{delay}$ as disclosed above. Then the OLT 200 may repeat operation S505 if the pre-equalization delay is changed and repeat operation S510. The ONUs 320 and 330 may then repeat operations S515 and S520. The runt response may be recognized by any method that is well known in the art or by the method disclosed in the US Patent Application published under the number US 2018/0183443 A1 .

If the OLT 200 determines that a runt response was received, optionally, at S528, the OLT 200 may broadcast instructions for unranged ONUs to send identifier information via subsequent runt responses RR in response to subsequent ranging grants.

If the OLT 200 determines that a runt response was received, at S530, the OLT 200 may broadcast a second ranging grant to the unranged ONUs with the same response time StartTime, random delay time $T_{ran}$, pre-equalization delay, and total delay $T_{delay}$ as used in the first ranging grant that resulted in the runt response RR being received in small quiet window. The second ranging grant may include an additional condition for a response to be sent. The additional condition may be based on the identifier of the responding unranged ONU. For example, the additional condition may be that an unranged ONU respond with a runt response RR if the identifier of the ONU is a certain value, or contains a certain value at a given location in the identifier. The OLT 200 may also adjust the total delay $T_{delay}$ and/or response delay $T_{RD}$ based on a time within the small quiet window that the runt response RR was received $T_{RR}$. The identifier may be a serial number or other unique identifier of the ONU.

At S535, the ONU 320 may respond to the second ranging grant with a runt response $RR_i$ if ONU 320 determines that the identifier of the ONU 320 meets the additional condition. At S540, the ONU 330 may respond to the second ranging grant with a runt response $RR_{ii}$, if ONU 330 determines that the identifier of the ONU 330 meets the additional condition.

At S545, the OLT 200 may determine if a runt response is received in the quiet window and if a unique identifier has been determined. If the OLT 200 determines that a unique identifier has not been determined the OLT 200 may broadcast a new second ranging grant with a new additional condition. Accordingly, steps S530-S45 may be repeated until the OLT 200 determines that a unique identifier has been determined. If a unique identifier has been determined, the OLT 200 may record the identifier in the memory 220.

In some example embodiments the OLT 200, at S528, may broadcast instructions for the ONU to respond to a certain number of ranging grants with runt responses in accordance to the bits of the identifier of the ONU. For example, the instructions may instruct the ONU to respond to 8 different ranging grants with the last 8 bits of the identifier of the unranged ONU. Then the OLT 200 and ONU may repeat S530 and S535 8 times. The unranged ONUs may respond with a runt response to indicate a "1" or not respond to indicate a "0." The OLT 200 may then determine using the received runt responses a determined portion of the identifier. Then the OLT 200 may repeat step S530 with the additional condition that the unranged ONU respond if the last 8 bits of the identifier are the determined portion of the identifier. If a runt response is received the OLT 200 may determine that the determined portion of the identifier is correct for at least one of the unranged ONUs. Or, if the determined portion is the entire identifier the OLT 200 may determine that the unique identifier has been determined. If a runt response is not received the OLT 200 may determine that there is interference and that it is not possible to obtain a unique identifier. Then the ONT 200 may broadcast instruction for each of the unranged ONUs to change the random delay times Tran and the OLT may repeat S528-S540.

In some other example embodiments, the OLT 200 may determine a unique identifier of one of the unranged ONUs by consecutively sending second ranging grants with additional conditions that incrementally determine the individual bits of the identifier of the unranged ONU. The OLT 200, at S530, may broadcast a second ranging grant with an additional condition that an unranged ONU respond if the first digit of the identifier of the ONU is a "1." At S545, the OLT 200 may determine if a runt response is received in the small quiet window. If a runt response is received in the small quiet window the ONU may determine that an unranged ONU has an identifier beginning with "1." If no runt response is received in the small quiet window the OLT 200 may determine that the unranged ONU has an identifier beginning with "0." At S545, based on the number of digits known to be included in ONU identifiers, the OLT 200 may determine if the number of determined digits of the identifier represents a complete unique identifier of the ONU. If the OLT 200 determines that a complete unique identifier has not been determined, then the OLT 200 may repeat S530 with an additional condition including the determined bits and a condition for the next unknown bit. For example, if the runt response was received and the OLT 200 determines that the first bit of the identifier of the unranged ONU is "1," the OLT 200 may send a second ranging grant with a condition that an unranged ONU only respond if the first two bits of the identifier are "11." Conversely, if the runt response was not received in the small quiet window and the OLT 200 determines that the first bit of the identifier of the unranged ONU is "0" the OLT 200 may send a second ranging grant with a condition that an unranged ONU only respond if the first two bits of the identifier are "01." Using the same operations, the OLT 200 may determine the second bit of the identifier. The same operations can be used to determine each of the bits of the identifier of one of the unranged ONUs until the OLT 200 determines that the complete unique identifier has been determined.

The OLT 200 may repeat step S530 at certain intervals with the additional condition that the unranged ONU respond if the identifier includes the determined portion of the identifier. If a runt response is received the OLT 200 may determine that the determined portion of the identifier is correct for at least one of the unranged ONUs. Or, if the determined portion is the entire identifier the OLT 200 may determine that the unique identifier has been determined. If a runt response is not received the OLT 200 may determine that there is interference and that it is not possible to obtain a unique identifier. Then the ONT 200 may broadcast instruction for each of the unranged ONUs to change the random delay time $T_{ran}$ and the OLT 200 may repeat S528-540.

In other example embodiments the OLT 200 may determine the identifier of one of the unranged ONUs is by sending a second ranging grant with an additional condition based on a hash of the identifier of the unranged ONU. In some example embodiments an 8 bit hash function may be used. The same processes discussed above may be used to determine the individual bits of the hash of the identifier of one of the unranged ONUs. Then once the hash of the identifier of one of the unranged ONUs is determined the OLT 200 may determine each of the possible unique identifiers that result in the determined hash of the identifier of one of the unranged ONUs. Then the OLT 200 may incrementally determine the unique identifier of one of the unranged ONUs by sending a second ranging grants with the additional condition of one of the possible identifiers based on the hash of the identifier until a runt response is received in the quiet window indicating that the possible identifier is the identifier of one of the unranged ONUs.

After the OLT 200 determines, at S545, that a unique identifier has been determined, the OLT 200, at S550, may establish a ranged state with the identified ONU. For example, if the identifier for the ONU 330 is determined, then the OLT 200 may establish a ranged state with ONU 330. Establishing a ranged state may include assigning an equalization delay to the ONU 330 based on the identifier of the ONU 330.

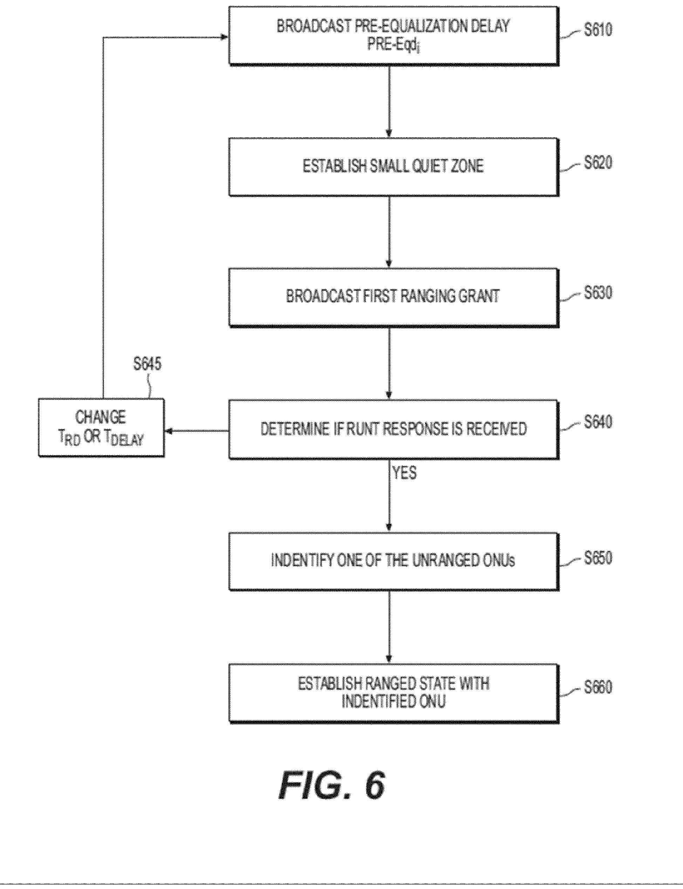

Fig. 6 is a flow diagram illustrating example method steps that may be performed by the OLT 200. At S610, the processor 230, via the MAC 250, may cause the transceiver 240 and the laser 245 to broadcast the pre-equalization delay. As stated above, this operation is optional. At S620, the processor 230 may establish a small quiet window by not requesting any responses from ranged ONUs to be received during the time period of the small quiet window. At S630, the processor 230, via the MAC 250, may cause the transceiver 240 and the laser 245 to broadcast a first ranging grant including a time StartTime$_i$ to unranged ONUs such as ONUs 320 and 330. The time StartTime$_i$ included in the ranging request represents a requested delay before the unranged ONU respond.

At S640, the processor 230 may determine whether a runt response RR is received at the OLT 200 during the small quiet window based on signals received by the transceiver 240. If the processor 230 determines that no runt response has been received in the small quiet window, at S645, The OLT 200 may change at least one of the response delay $T_{RD}$ and the timing delay $T_{delay}$ as disclosed above using the processor 230 and the transceiver 240. The OLT 200 may repeat some or all of operations S610-S640 until the processor 230 determines a runt response RR is received. The processor may also determine whether a runt response was received during quiet periods, where no signal is received from the ranged ONUs, other than the small quiet window. If the processor determines that a runt response is received in a quiet period other than the small quiet window the processor may adjust the timing delay $T_{delay}$ based to the time when the runt response was received.

At S650, the OLT 200 may identify one of the unranged ONUs in response to the processor 230 determining at S640 that a runt response RR was received. The OLT 200 may identify one of the unranged ONUs using the processor 230, the transceiver 240 and the memory 220. Optionally, the processor 230 via the MAC 250 may control the transceiver 240 to broadcast instructions for unranged ONUs to send identifier information via subsequent runt responses RR in response to subsequent ranging grants. The processor 230, via the MAC 250, may cause the transceiver 240 to broadcast a second ranging grant with an additional condition for response based on an identifier of the optical transceiver. The processor 230 may determine if a runt response is received in the small quiet window and determine if a unique identifier has been determined. If the processor 230 determines that a unique identifier is determined then the processor may record the identifier in the memory 220, or in other words, cause the memory 220 to store the identifier. If the processor 230 determines that a unique identifier is not determined then the processor 230, via the MAC 250, may cause the transceiver 240 to broadcast a new second ranging grant with a new additional condition to the unranged ONUs.

The processor 230 of the OLT 200 may determine that the unique identifier is not obtainable by requesting that an unranged ONU respond with a runt response RR if the identifier of the ONU is the determined identifier or includes a determined portion of the identifier. If the processor 230 via the transceiver 240 determines that no runt response RR is received in the small quiet window, the processor 230 may determine that the unique identifier is not obtainable. If a unique identifier is not obtainable, the cause may be interference between at least two unranged ONUs. If the processor 230 determines that the unique identifier is not obtainable, the processor 230, via the MAC 250, may cause the transceiver 240 to broadcast instructions for all unranged ONUs to change the random delay time $T_{ran}$ of the ONU and repeat S640.

At S660, the OLT 200 may establish a ranged state with the identified unranged ONU. The OLT 200 may establish the ranged state with the identified unranged ONU using the processor 230, memory 220 and transceiver 240. The processor 230 may determine an equalization delay for the identified ONU based on any of or a combination of the timing delay $T_{delay}$, the pre-equalization delay Pre-Eqd$_i$, the response delay $T_{RD}$, the time within the small quiet window that the runt response RR was received $T_{RR}$, and a response delay for receiving the identifier after broadcasting the request for the unranged ONUs to send an identifier. The processor 230, via the MAC 250, may cause the transceiver 240 to send the equalization delay to the identified ONU. Once the ranged state is established, the ONU can respond to normal grants with normal (non runt) bursts without collision with normal bursts from other ranged ONUs.

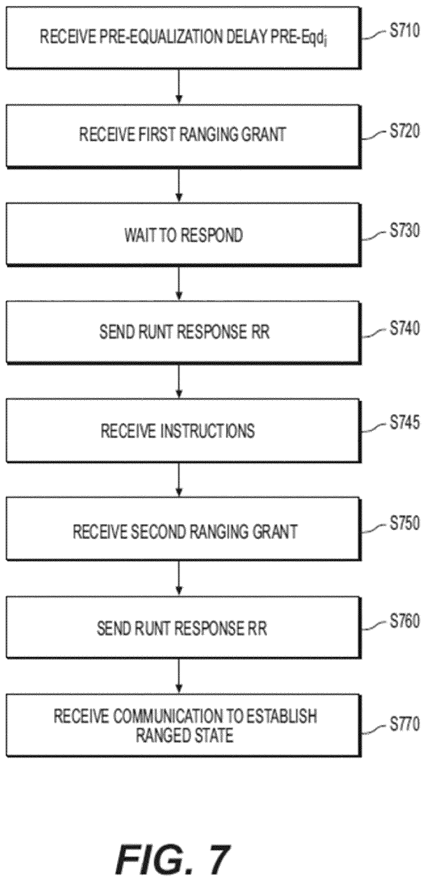

Fig. 7 is a flow diagram illustrating another example embodiment of a method including steps that may be performed by an ONU, such as ONU 330.

At S710, the transceiver 350 may receive a pre-equalization delay Pre-Eqd$_i$ from the OLT 200. At S720, the transceiver 350 may receive a first ranging grant from OLT 200 including a time Start Time. At S730, the processor 360 may cause the ONU to wait to respond until after each of the Response time RspTime$_i$, the pre-equalization delay Pre-Eqd$_i$, and the time StartTime$_i$ have passed before sending a response. At S740, the processor 360, via the MAC 380, may cause the transceiver 350 to respond to the first ranging grant by sending a runt response RR at a low power of the laser 355, the low power being lower than normal power for sending data packets.

The processor 360 may cause the runt response RR to be sent at a low power of the laser by causing the transceiver to power up the laser 355 and before the laser 355 can power up to a normal power for transmitting data packets causing the transceiver to send the runt response. The processor 360 may also cause the runt response RR to be sent at a low power of the laser by causing the transceiver to restrict the power of the laser to a low power using the laser power control circuit 357.

Optionally, at S745, processor 360 via the transceiver 350 may receive instructions for a sending identifier information via subsequent runt responses RR in response to subsequent ranging grants.

At S750, the transceiver 350 may receive a second ranging grant with the additional condition based on the identifier of the ONU 330. The processor 360, via the MAC 380, may cause the transceiver 350 to send a runt response if the processor 360 determines that the identifier of ONU 330 meets the additional condition. The processor 360, at S760, via the MAC 380, may cause the transceiver 350 to send runt response after each of the Response time RspTime$_i$, the pre-equalization delay Pre-Eqd$_i$, and the time StartTime$_i$ to have passed. If the processor 360 determines that the identifier of ONU 330 does not meet the additional condition then the processor 360, via the MAC 380, may not cause the transceiver 350 to send the runt response.

At S770, the transceiver 350 may receive at least one communication from OLT 200 establishing a ranged state with ONU 330. The at least one communication may include an equalization delay for the ONU 330 to use in further communications with the OLT 200. These operations may be repeated or performed in a different order than the order shown in Fig. 7, depending on the communications received from the OLT 200.

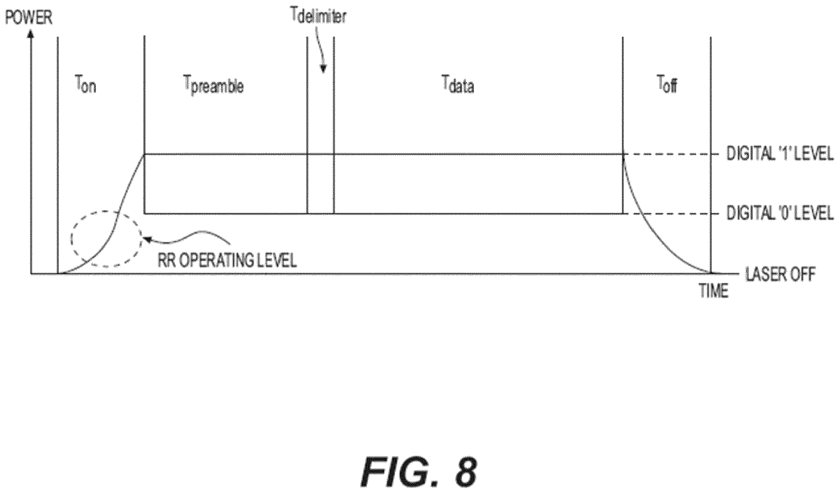

Fig. 8 is a diagram demonstrating example power levels of a laser 355 in ONU 300. When the laser 355 is powered on the laser may take a time T$_{on}$ to reach a normal operating power or normal power level. T$_{on}$ may be an example of a power up time. When the laser 355 sends out data at the ordinary operating power, at T$_{preamble}$ the data may be proceeded by an indicator of the start of data that may be 32 or 64 bits. The time at which the laser 355 sends the start of data indicator may be T$_{delimiter}$. The laser 355 may then send data packet at a time T$_{data}$. The length of T$_{data}$ may vary depending on the size of the data packet. When sending data the laser sends a digit '1' at a digital '1' level and a digital '0' at a digital '0' level. After the data packet has been sent the laser 355 may be powered down. The laser 355 may take time T$_{off}$ to power down.

The laser 355 does not need to send usable data when it is being controlled to send a runt response. When the laser is being controlled by the processor 340 to send the runt response the laser sends the runt response RR at a runt response operating level which is below the digital '1' level. The runt response RR may be sent at a power level above the digital '0' level.

In an example embodiment, the runt response RR may be sent during T$_{on}$ at a time when the power is low enough that the runt response RR will not substantially interfere with communications between the OLT 200 and ranged ONUs. Substantial interference may be interference that cannot be corrected by forward error correction methods that are known and implemented in the art.

The processor 360 may control powering up or powering down the laser 355 such that the runt response RR can be sent during a portion of T$_{on}$ when the runt response RR will not substantially interfere with communications between the OLT 200 and ranged ONUs. In an example embodiment, the runt response RR may be 96 bits sent at a rate of 2.48832 Gbps (about 38.4 ns), T$_{on}$ and T$_{off}$, may be about 128 ns. T$_{on}$ time may vary depending on the laser that is used. The runt response RR may be sent during T$_{on}$ when the laser 355 reaches a power of sufficiently below normal power levels so as to not cause substantially impacting traffic of ranged ONUs. The runt response may be received at a power level below the sensitivity point of transceiver 230 of the OLT 200, because the runt response RR may not carry any data other than if the runt response RR is present or not. Sensitivity is the point where the transceiver 240 of the OLT 200 is no longer able to properly determine a "1" or "0" to a recoverable bit error level.

In another example embodiment, the laser power control circuit 357 may restrict the power of the laser to a power level below a normal power level for sending a digital "1." In another example embodiment, the laser power control circuit 357 may restrict the power of the laser to a power level below a normal power level for sending a digital "0."

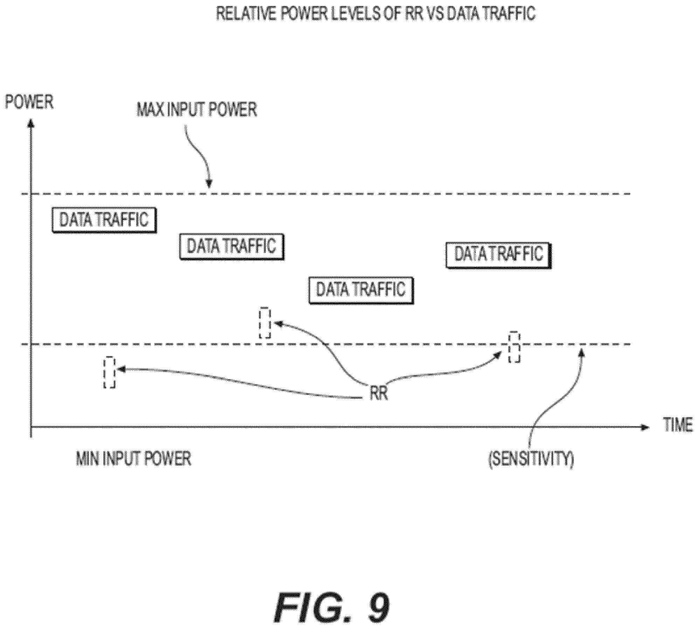

Fig. 9 is a diagram demonstrating example power levels of runt responses received at the OLT 200 from the unranged ONUs, such as ONUs 320 and 330. Fig. 9 also shows example power levels of data traffic sent from ranged ONUs, such as ONU 310. The runt response RR signals may have different power levels because the runt response signals may be sent on fiber optic cables with different lengths and thus the power loss may be great for some runt responses RR than other runt responses RR. The runt responses may also have different power levels based on the individual power output of the lasers 355 of the ONUs. Similarly, power levels of the data traffic sent from the ranged ONUs may differ in power level.

The max input power at the receiver is the maximum power for the transceiver 240 of the OLT 200. The minimum input power at the receiver is the sensitivity of the transceiver 240 of the OLT 200. The runt response RR may be received with a power level above or below the sensitivity of the transceiver 240 of the OLT 200.

The above described example embodiments may provide the advantage that the PON may identify and range unranged ONUs without needing a large quiet window of multiple frames, thus the above described example embodiments may allow the PON to identify and range unranged ONUs without substantially impacting traffic of ranged ONUs.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A method for a first optical transceiver (200) to range in a Passive Optical Network (100) one of a plurality of second optical transceivers (310, 320, 330) comprising:

   broadcasting (S630) a first ranging grant including a delay request to unranged second optical transceivers among said plurality of second optical transceivers (310, 320, 330), said delay request indicating a first delay before said unranged second optical transceivers respond to said first ranging grant such that said unranged second optical transceivers respond after a desired delay, the desired delay being the first delay;

   determining (S640) whether a runt response is received in a quiet window established by said first optical transceiver (200), said quiet window being a time that is a fraction of the upstream frame size when no responses are expected from ranged second optical transceivers among said plurality of second optical transceivers (310, 320, 330) by not requesting responses from said ranged second optical transceivers with start times that would cause said responses to arrive during said quiet window, and said runt response being a burst sent by a laser of one of said second optical transceivers (310, 320, 330) with a laser power being below the maximum laser power such that said runt response does not substantially interfere with communication with other optical transceivers;

   changing (S645) one of said desired delay or a timing of said quiet window in response to determining that no runt response was received in said quiet window;

   repeating said broadcasting and said determining (S630, S640) in response to determining that no runt response was received in said quiet window;

   identifying (S650) one of said unranged second optical transceivers in response to determining that a runt response was received; and

   establishing (S660) a ranged state with the identified one of said unranged second optical transceivers.

2. The method according to claim 1 further comprising broadcasting (S610) a pre-equalization delay, said pre-equalization delay being a second delay before said unranged second optical transceivers respond to said first ranging grant.

3. The method according to claim 2, wherein said desired delay is the sum of the first delay and second delay and said desired delay is changed by broadcasting a pre-equilization delay different from the previous pre-equilization delay.

4. The method according to any of claims 1, 2, or 3, wherein said desired delay is changed by broadcasting a new first ranging grant with a new delay request different from the previous delay request.

5. The method according to any of claims 1, 2, 3, or 4, wherein said changing includes changing said timing of said quiet window.

6. The method according to any of claims 1, 2, 3, 4, or 5, wherein said identifying includes:

   broadcasting a second ranging grant to request to said unranged second optical transceivers to send a runt response with an additional condition for response, said additional condition for response being based on an identifier,
determining if a runt response is received in said quiet window.

7. The method according to any of claims 1, 2, 3, 4, 5, or 6, wherein establishing a ranged state with the identified one of the unranged second optical transceivers includes:

determining an equalization delay based on said desired delay, and
transmitting said equalization delay to said identified one of said unranged second optical transceivers.

8. The method according to any of claims 1, 2, 3, 4, 5, 6, or 7, further comprising:
broadcasting (S645) instructions for unranged second optical transceivers to change a random delay, said random delay being a random amount of time that the second optical transceivers wait before responding to ranging grants.

9. A first optical transceiver (200) for a Passive Optical Network (100), comprising:

a memory (220) including computer readable instructions; and
a processor (230) configured to execute the computer readable instructions,
wherein said memory (220), said processor (230) and the computer readable instructions cause the first optical transceiver (200) to:

broadcast a first ranging grant including a delay request to unranged second optical transceivers among a plurality of second optical transceivers (310, 320, 330), said delay request indicating a first delay before said unranged second optical transceivers respond to said first ranging grant such that said unranged second optical transceivers respond after a desired delay, the desired delay being the first delay,
determine whether a runt response is received in a quiet window established by said first optical transceiver (200), said quiet window being a time that is a fraction of the upstream frame size when no responses are expected from ranged second optical transceivers among said plurality of second optical transceivers (310, 320, 330) by not requesting responses from said ranged second optical transceivers with start times that would cause said responses to arrive during said quiet window, and said runt response being a burst sent by a laser of one of said second optical transceivers (310, 320, 330) with a laser power being below the maximum laser power such that said runt response does not substantially interfere with communication with other optical transceivers,
change one of said desired delay or a timing of said quiet window in response to determining that no runt response was received in said quiet window,
repeat the broadcasting and the determining in response to determining that no runt response was received in said quiet window,
identify one of said unranged second optical transceivers in response to determining that a runt response was received, and
establish a ranged state with the identified one of said unranged second optical transceivers.

10. The first optical transceiver (200) according to claim 9 wherein said memory (220), said processor (230) and said computer readable instructions cause said first optical transceiver (200) to:
broadcast a pre-equalization delay, said pre-equalization delay being a second delay before said unranged second optical transceivers respond to said first ranging grant.

11. The first optical transceiver (200) according to claim 10, wherein said desired delay is the sum of the first delay and second delay and said desired delay is changed by broadcasting a pre-equilization delay different from the previous pre-equilization delay.

12. The first optical transceiver (200) according to any of claims 9, 10, or 11, wherein said desired delay is changed by broadcasting a new first ranging grant with a new delay request different from the previous delay request.

13. The first optical transceiver (200) according to any of claims 9, 10, 11, or 12 wherein the changing includes changing said timing of said quiet window.

14. The first optical transceiver (200) according to any of claims 9, 10, 11, 12, or 13, wherein said memory (220), said processor (230) and said computer readable instructions identify one of said unranged second optical transceivers by:

broadcasting a second ranging grant to request to said unranged second optical transceivers to send a runt response with an additional condition for response, said additional condition for response being based on an identifier,
determining if a runt response is received in said quiet window.

15. The first optical transceiver (200) according to any of claims 9, 10, 11, 12, 13, or 14, wherein said memory (220), said processor (230) and said computer readable instructions establish a ranged state with the identified one of said unranged second optical transceivers by:

determining an equalization delay based on said desired delay, and
transmitting said equalization delay to said identified one of said unranged second optical transceivers.

**Patentansprüche**

1. Verfahren für einen ersten optischen Transceiver (200), um in einem passiven optischen Netzwerk (100) einen aus einer Vielzahl von zweiten optischen Transceivern (310, 320, 330) einzuordnen, umfassend:

Rundsenden (S630) einer ersten Einordnungsgewährung einschließlich einer Verzögerungsanforderung an nicht eingeordnete zweite optische Transceiver aus der Vielzahl von zweiten optischen Transceivern (310, 320, 330), wobei die Verzögerungsanforderung eine erste Verzögerung angibt, bevor die nicht eingeordneten zweiten optischen Transceiver auf die erste Einordnungsgewährung antworten, so dass die nicht eingeordneten zweiten optischen Transceiver nach einer gewünschten Verzögerung antworten, wobei die gewünschte Verzögerung die erste Verzögerung ist;
Bestimmen (S640), ob eine Runt-Antwort in einem von dem ersten optischen Transceiver (200) eingerichteten Ruhefenster empfangen wird, wobei das Ruhefenster eine Zeit ist, die ein Bruchteil der stromaufwärts gerichteten Frame-Größe ist, wenn keine Antworten von eingeordneten zweiten optischen Transceivern aus der Vielzahl von zweiten optischen Transceivern (310, 320, 330) erwartet werden, indem keine Antworten von den eingeordneten zweiten optischen Transceivern mit Startzeiten angefordert werden, die bewirken würden, dass die Antworten während des Ruhefensters eintreffen würden, und wobei die Runt-Antwort ein Burst ist, der von einem Laser eines der zweiten optischen Transceiver (310, 320, 330) mit einer Laserleistung gesendet wird, die unter der maximalen Laserleistung liegt, so dass die Runt-Antwort die Kommunikation mit anderen optischen Transceivern nicht wesentlich stört;
Ändern (S645) entweder der gewünschten Verzögerung oder einer Zeitsteuerung des Ruhefensters als Reaktion auf das Bestimmen, dass keine Runt-Antwort in dem Ruhefenster empfangen wurde;
Wiederholen des Rundsendens und des Bestimmens (S630, S640) als Reaktion auf das Bestimmen, dass keine Runt-Antwort in dem Ruhefenster empfangen wurde;
Identifizieren (S650) eines der nicht eingeordneten zweiten optischen Transceiver als Reaktion auf das Bestimmen, dass eine Runt-Antwort empfangen wurde; und
Herstellen (S660) eines eingeordneten Zustands bei dem identifizierten der nicht eingeordneten zweiten optischen Transceiver.

2. Verfahren nach Anspruch 1, das weiter das Rundsenden (S610) einer Vorausgleichsverzögerung umfasst, wobei die Vorausgleichsverzögerung eine zweite Verzögerung ist, bevor die nicht eingeordneten zweiten optischen Transceiver auf die erste Einordnungsgewährung antworten.

3. Verfahren nach Anspruch 2, wobei die gewünschte Verzögerung die Summe der ersten Verzögerung und der zweiten Verzögerung ist und die gewünschte Verzögerung durch Rundsenden einer Vorausgleichsverzögerung geändert wird, die sich von der vorherigen Vorausgleichsverzögerung unterscheidet.

4. Verfahren nach einem der Ansprüche 1, 2 oder 3, wobei die gewünschte Verzögerung durch Rundsenden einer neuen ersten Einordnungsgewährung mit einer neuen Verzögerungsanforderung geändert wird, die sich von der vorherigen Verzögerungsanforderung unterscheidet.

5. Verfahren nach einem der Ansprüche 1, 2, 3 oder 4, wobei die Änderung die Änderung der Zeitsteuerung des Ruhefensters umfasst.

6. Verfahren nach einem der Ansprüche 1, 2, 3, 4 oder 5, wobei das Identifizieren umfasst:

Rundsenden einer zweiten Einordnungsgewährung, um die nicht eingeordneten zweiten optischen Transceiver aufzufordern, eine Runt-Antwort mit einer zusätzlichen Bedingung für eine Antwort zu senden, wobei die zusätzliche Bedingung für eine Antwort auf einer Kennung basiert,

Bestimmen, ob eine Runt-Antwort in dem Ruhefenster empfangen wird.

7. Verfahren nach einem der Ansprüche 1, 2, 3, 4, 5 oder 6, wobei das Herstellen eines eingeordneten Zustands bei dem identifizierten der nicht eingeordneten zweiten optischen Transceiver umfasst:

Bestimmen einer Ausgleichsverzögerung basierend auf der gewünschten Verzögerung und Übertragen der Ausgleichsverzögerung zu dem identifizierten der nicht eingeordneten zweiten optischen Transceiver.

8. Verfahren nach einem der Ansprüche 1, 2, 3, 4, 5, 6 oder 7, das weiter umfasst:
Rundsenden (S645) von Befehlen für nicht eingeordnete zweite optische Transceiver, eine zufällige Verzögerung zu ändern, wobei die zufällige Verzögerung eine zufällige Menge an Zeit ist, die die zweiten optischen Transceiver vor dem Antworten auf Einordnungsgewährungen warten.

9. Erster optischer Transceiver (200) für ein passives optisches Netzwerk (100), umfassend:

einen Speicher (220) mit computerlesbaren Befehlen; und
einen Prozessor (230), der dafür konfiguriert ist, die computerlesbaren Befehle auszuführen,
wobei der Speicher (220), der Prozessor (230) und die computerlesbaren Befehle den ersten optischen Transceiver (200) veranlassen zum:

Rundsenden einer ersten Einordnungsgewährung einschließlich einer Verzögerungsanforderung an nicht eingeordnete zweite optische Transceiver aus der Vielzahl von zweiten optischen Transceivern (310, 320, 330), wobei die Verzögerungsanforderung eine erste Verzögerung angibt, bevor die nicht eingeordneten zweiten optischen Transceiver auf die erste Einordnungsgewährung antworten, so dass die nicht eingeordneten zweiten optischen Transceiver nach einer gewünschten Verzögerung antworten, wobei die gewünschte Verzögerung die erste Verzögerung ist,
Bestimmen, ob eine Runt-Antwort in einem von dem ersten optischen Transceiver (200) eingerichteten Ruhefenster empfangen wird, wobei das Ruhefenster eine Zeit ist, die ein Bruchteil der stromaufwärts gerichteten Frame-Größe ist, wenn keine Antworten von eingeordneten zweiten optischen Transceivern aus der Vielzahl von zweiten optischen Transceivern (310, 320, 330) erwartet werden, indem keine Antworten von den eingeordneten zweiten optischen Transceivern mit Startzeiten angefordert werden, die bewirken würden, dass die Antworten während des Ruhefensters eintreffen würden, und wobei die Runt-Antwort ein Burst ist, der von einem Laser eines der zweiten optischen Transceiver (310, 320, 330) mit einer Laserleistung gesendet wird, die unter der maximalen Laserleistung liegt, so dass die Runt-Antwort die Kommunikation mit anderen optischen Transceivern nicht wesentlich stört;
Ändern entweder der gewünschten Verzögerung oder einer Zeitsteuerung des Ruhefensters als Reaktion auf das Bestimmen, dass keine Runt-Antwort in dem Ruhefenster empfangen wurde,
Wiederholen des Rundsendens und des Bestimmens als Reaktion auf das Bestimmen, dass keine Runt-Antwort in dem Ruhefenster empfangen wurde,
Identifizieren eines der nicht eingeordneten zweiten optischen Transceiver als Reaktion auf das Bestimmen, dass eine Runt-Antwort empfangen wurde, und
Herstellen eines eingeordneten Zustands bei dem identifizierten der nicht eingeordneten zweiten optischen Transceiver.

10. Erster optischer Transceiver (200) nach Anspruch 9, wobei der Speicher (220), der Prozessor (230) und die computerlesbaren Befehle den ersten optischen Transceiver (200) veranlassen zum:
Rundsenden einer Vorausgleichsverzögerung umfasst, wobei die Vorausgleichsverzögerung eine zweite Verzögerung ist, bevor die nicht eingeordneten zweiten optischen Transceiver auf die erste Einordnungsgewährung antworten.

11. Erster optischer Transceiver (200) nach Anspruch 10, wobei die gewünschte Verzögerung die Summe der ersten Verzögerung und der zweiten Verzögerung ist und die gewünschte Verzögerung durch Rundsenden einer Vorausgleichsverzögerung geändert wird, die sich von der vorherigen Vorausgleichsverzögerung unterscheidet.

**12.** Erster optischer Transceiver (200) nach einem der Ansprüche 9, 10 oder 11, wobei die gewünschte Verzögerung durch Rundsenden einer neuen ersten Einordnungsgewährung mit einer neuen Verzögerungsanforderung geändert wird, die sich von der vorherigen Verzögerungsanforderung unterscheidet.

**13.** Erster optischer Transceiver (200) nach einem der Ansprüche 9, 10, 11 oder 12, wobei die Änderung die Änderung der Zeitsteuerung des Ruhefensters umfasst.

**14.** Erster optischer Transceiver (200) nach einem der Ansprüche 9, 10, 11, 12 oder 13, wobei der Speicher (220), der Prozessor (230) und die computerlesbaren Befehle einen der nicht eingeordneten zweiten optischen Transceiver identifizieren durch:

Rundsenden einer zweiten Einordnungsgewährung, um die nicht eingeordneten zweiten optischen Transceiver aufzufordern, eine Runt-Antwort mit einer zusätzlichen Bedingung für eine Antwort zu senden, wobei die zusätzliche Bedingung für eine Antwort auf einer Kennung basiert,
Bestimmen, ob eine Runt-Antwort in dem Ruhefenster empfangen wird.

**15.** Erster optischer Transceiver (200) nach einem der Ansprüche 9, 10, 11, 12, 13 oder 14, wobei der Speicher (220), der Prozessor (230) und die computerlesbaren Befehle einen eingeordneten Zustand bei dem identifizierten der nicht eingeordneten zweiten optischen Transceiver herstellen durch:

Bestimmen einer Ausgleichsverzögerung basierend auf der gewünschten Verzögerung, und
Übertragen der Ausgleichsverzögerung zu dem identifizierten der nicht eingeordneten zweiten optischen Transceiver.

## Revendications

**1.** Procédé destiné à permettre à un premier émetteur/récepteur optique (200) d'atteindre, sur un réseau optique passif (100), l'un d'une pluralité de seconds émetteurs/récepteurs optiques (310, 320, 330) qui comprend :

la diffusion (S630) d'une première autorisation de télémétrie qui comprend une demande de retard vers des seconds émetteurs/récepteurs optiques non atteints parmi ladite pluralité de seconds émetteurs/récepteurs optiques (310, 320, 330), dans lequel ladite demande de retard indique un premier retard avant que lesdits seconds émetteurs/récepteurs optiques non atteints répondent à ladite première autorisation de télémétrie de sorte que lesdits seconds émetteurs/récepteurs optiques non atteints répondent après un retard souhaité, dans lequel le retard souhaité est le premier retard ;
la détermination (S640) du fait qu'une réponse soit reçue ou non dans une fenêtre de silence établie par ledit premier émetteur/récepteur optique (200), dans lequel ladite fenêtre de silence est une durée qui est une fraction de la taille de trames amont lorsqu'aucune réponse n'est attendue de la part des seconds émetteurs/récepteurs optiques atteints parmi ladite pluralité de seconds émetteurs/récepteurs optiques (310, 320, 330) en ne demandant pas de réponses de la part desdits seconds émetteurs/récepteurs optiques atteints avec des moments de début qui font que lesdites réponses arrivent pendant ladite fenêtre de silence, et dans lequel ladite réponse est une salve envoyée par un laser de l'un desdits seconds émetteurs/récepteurs optiques (310, 320, 330) avec une puissance laser inférieure à la puissance laser maximale de sorte que ladite réponse ne perturbe pas sensiblement la communication avec les autres émetteurs/récepteurs optiques ;
la modification (S645) de l'un dudit retard souhaité ou d'une synchronisation de ladite fenêtre de silence en réponse à la détermination du fait qu'aucune réponse n'ait été reçue dans ladite fenêtre de silence ;
la répétition de ladite diffusion et de ladite détermination (S630, S640) en réponse à la détermination du fait qu'aucune réponse n'ait été reçue dans ladite fenêtre de silence ;
l'identification (S650) de l'un desdits seconds émetteurs/récepteurs optiques non atteints en réponse à la détermination du fait qu'une réponse ait été reçue ; et
l'établissement (S660) d'un état de télémétrie avec l'un desdits seconds émetteurs/récepteurs optiques non atteints identifiés.

**2.** Procédé selon la revendication 1, qui comprend en outre la diffusion (S610) d'un retard de pré-égalisation, dans lequel ledit retard de pré-égalisation est un second retard avant que lesdits seconds émetteurs/récepteurs optiques non atteints répondent à ladite première autorisation de télémétrie.

**3.** Procédé selon la revendication 2, dans lequel ledit retard souhaité est la somme du premier retard et du second retard, et ledit retard souhaité est modifié en diffusant un retard de pré-égalisation différent du précédent retard de pré-égalisation.

**4.** Procédé selon l'une quelconque des revendications 1, 2 ou 3, dans lequel ledit retard souhaité est modifié en diffusant une nouvelle première autorisation de télémétrie avec une nouvelle demande de retard différente de la précédente demande de retard.

**5.** Procédé selon l'une quelconque des revendications 1, 2, 3, ou 4, dans lequel ladite modification comprend la modification de ladite synchronisation de ladite fenêtre de silence.

**6.** Procédé selon l'une quelconque des revendications 1, 2, 3, 4 ou 5, dans lequel ladite identification comprend :

la diffusion d'une seconde autorisation de télémétrie afin de demander auxdits seconds émetteurs/récepteurs optiques non atteints d'envoyer une réponse avec une condition supplémentaire de réponse, dans lequel ladite condition supplémentaire de réponse repose sur un identifiant,
la détermination du fait qu'une réponse soit reçue ou non dans ladite fenêtre de silence.

**7.** Procédé selon l'une quelconque des revendications 1, 2, 3, 4, 5 ou 6, dans lequel l'établissement d'un état de télémétrie avec l'un des seconds émetteurs/récepteurs optiques non atteints identifiés comprend :

la détermination d'un retard d'égalisation sur la base dudit retard souhaité, et
la transmission dudit retard d'égalisation audit émetteur/récepteur optique identifié parmi lesdits seconds émetteurs/récepteurs optiques non atteints.

**8.** Procédé selon l'une quelconque des revendications 1, 2, 3, 4, 5, 6 ou 7, qui comprend en outre :

la diffusion (S645) d'instructions destinées à permettre aux seconds émetteurs/récepteurs optiques non atteints de modifier un retard aléatoire, dans lequel ledit retard aléatoire est une durée aléatoire pendant laquelle les seconds émetteurs/récepteurs optiques attendent avant de répondre aux autorisations de télémétrie.

**9.** Premier émetteur/récepteur optique (200) destiné à un réseau optique passif (100), qui comprend :

une mémoire (220) qui contient des instructions lisibles par un ordinateur ; et
un processeur (230) configuré pour exécuter les instructions lisibles par un ordinateur,
dans lequel ladite mémoire (220), ledit processeur (230) et les instructions lisibles par un ordinateur permettent au premier émetteur/récepteur optique (200) de :

diffuser une première autorisation de télémétrie qui comprend une demande de retard vers des seconds émetteurs/récepteurs optiques non atteints parmi une pluralité de seconds émetteurs/récepteurs optiques (310, 320, 330), dans lequel ladite demande de retard indique un premier retard avant que lesdits seconds émetteurs/récepteurs optiques non atteints répondent à ladite première autorisation de télémétrie de sorte que lesdits seconds émetteurs/récepteurs optiques non atteints répondent après un retard souhaité, dans lequel le retard souhaité est le premier retard,
déterminer si une réponse est reçue ou non dans une fenêtre de silence établie par ledit premier émetteur/récepteur optique (200), dans lequel ladite fenêtre de silence est une durée qui est une fraction de la taille de trames amont lorsqu'aucune réponse n'est attendue de la part des seconds émetteurs/récepteurs optiques atteints parmi ladite pluralité de seconds émetteurs/récepteurs optiques (310, 320, 330) en ne demandant pas de réponses de la part desdits seconds émetteurs/récepteurs optiques atteints avec des moments de début qui font que lesdites réponses arrivent pendant ladite fenêtre de silence, et dans lequel ladite réponse est une salve envoyée par un laser de l'un desdits seconds émetteurs/récepteurs optiques (310, 320, 330) avec une puissance laser inférieure à la puissance laser maximale de sorte que ladite réponse ne perturbe pas sensiblement la communication avec les autres émetteurs/récepteurs optiques,
modifier l'un dudit retard souhaité ou d'une synchronisation de ladite fenêtre de silence en réponse à la détermination du fait qu'aucune réponse n'ait été reçue dans ladite fenêtre de silence,
répéter la diffusion et la détermination en réponse à la détermination du fait qu'aucune réponse n'ait été reçue dans ladite fenêtre de silence,
identifier l'un desdits seconds émetteurs/récepteurs optiques non atteints en réponse à la détermination du fait qu'une réponse ait été reçue, et
établir un état de télémétrie avec l'un desdits seconds émetteurs/récepteurs optiques non atteints identifiés.

10. Premier émetteur/récepteur optique (200) selon la revendication 9, dans lequel ladite mémoire (220), ledit processeur (230) et lesdites instructions lisibles par un ordinateur permettent audit premier émetteur/récepteur optique (200) de :
diffuser un retard de pré-égalisation, dans lequel ledit retard de pré-égalisation est un second retard avant que lesdits seconds émetteurs/récepteurs optiques non atteints répondent à ladite première autorisation de télémétrie.

11. Premier émetteur/récepteur optique (200) selon la revendication 10, dans lequel ledit retard souhaité est la somme du premier retard et du second retard, et ledit retard souhaité est modifié en diffusant un retard de pré-égalisation différent du précédent retard de pré-égalisation.

12. Premier émetteur/récepteur optique (200) selon l'une quelconque des revendications 9, 10 ou 11, dans lequel ledit retard souhaité est modifié en diffusant une nouvelle première autorisation de télémétrie avec une nouvelle demande de retard différente de la précédente demande de retard.

13. Premier émetteur/récepteur optique (200) selon l'une quelconque des revendications 9, 10, 11 ou 12, dans lequel la modification comprend la modification de ladite synchronisation de ladite fenêtre de silence.

14. Premier émetteur/récepteur optique (200) selon l'une quelconque des revendications 9, 10, 11, 12 ou 13, dans lequel ladite mémoire (220), ledit processeur (230) et lesdites instructions lisibles par un ordinateur identifient l'un desdits seconds émetteurs/récepteurs optiques non atteints en :

diffusant une seconde autorisation de télémétrie afin de demander auxdits seconds émetteurs/récepteurs optiques non atteints d'envoyer une réponse avec une condition supplémentaire de réponse, dans lequel ladite condition supplémentaire de réponse repose sur un identifiant,
déterminant si une réponse est reçue dans ladite fenêtre de silence.

15. Premier émetteur/récepteur optique (200) selon l'une quelconque des revendications 9, 10, 11, 12, 13 ou 14, dans lequel ladite mémoire (220), ledit processeur (230) et lesdites instructions lisibles par un ordinateur établissent un état de télémétrie avec l'un desdits seconds émetteurs/récepteurs optiques non atteints identifiés en :

déterminant un retard d'égalisation sur la base dudit retard souhaité, et
en transmettant ledit retard d'égalisation audit émetteur/récepteur optique identifié parmi lesdits seconds émetteurs/récepteurs optiques non atteints.

PON 100

310

200

110

120

ONU

320

OLT

SPLITTER

110

110

ONU

110

330

ONU

**FIG. 1**

OLT 200

**FIG. 2**

*FIG. 3*

FIG. 4

200                                                                    320        330

BROADCAST PRE-EQUALIZATION DELAY PRE-Eqd$_i$ — S505

BROADCAST FIRST RANGING GRANT — S510

RUNT RESPONSE RR$_i$ — S515                                    TDR$_i$

RUNT RESPONSE RR$_i$ — S520                                              TDR$_{ii}$

BROADCAST INSTRUCTIONS — S528

S525

BROADCAST SECOND RANGING GRANT — S530

RUNT RESPONSE RR$_i$ — S535

RUNT RESPONSE RR$_i$ — S540

ESTABLISH RANGED STATE — S550

S545

## FIG. 5

20

FIG. 6

RECEIVE PRE-EQUALIZATION DELAY PRE-Eqd$_j$ — S710

RECEIVE FIRST RANGING GRANT — S720

WAIT TO RESPOND — S730

SEND RUNT RESPONSE RR — S740

RECEIVE INSTRUCTIONS — S745

RECEIVE SECOND RANGING GRANT — S750

SEND RUNT RESPONSE RR — S760

RECEIVE COMMUNICATION TO ESTABLISH RANGED STATE — S770

*FIG. 7*

*FIG. 8*

EP 3 573 343 B1

RELATIVE POWER LEVELS OF RR VS DATA TRAFFIC

FIG. 9

EP 3 573 343 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2448152 A1

- US 20180183443 A1

**Non-patent literature cited in the description**

- *Gigabit-capable passive optical networks (G-PON): Transmission convergence layer specification,* 13 November 2015